# EUROPÄISCHE PATENTANMELDUNG

(11) **EP 2 050 336 A1**
(43) Veröffentlichungstag der Anmeldung: **22.04.2009**
(21) Anmeldenummer: 07118917.9
(22) Anmeldetag: 19.10.2007
(51) Int. Cl.: A01M 1/20, A01M 17/00

(54) **Insektenschutzmittel**

(71) Anmelder: Jeyes Deutschland GmbH, 86633 Neuburg (DE)
(72) Erfinder: Halbritter, Ingrid, 86633 Neuburg/Donau (DE)
(74) Vertreter: Lampe, Sigmar

(57) **Zusammenfassung**

Ein Insektenschutzmittel umfasst ein Trägermaterial (1), das mit einem Wirkstoff beaufschlagt ist, wobei mindestens ein wirkstofffreier Bereich auf dem Trägermaterial vorgesehen ist, und das Insektenschutzmittel eine Vorrichtung (4) zur Anzeige der verbleibenden Wirkungsdauer des Wirkstoffs aufweist.

## Beschreibung

Die vorliegende Erfindung betrifft Insektenschutzmittel. Insbesondere betrifft die vorliegende Erfindung Insektenschutzmittel, die das Ende der wirksamen Verwendung anzeigen. Darüber hinaus betrifft die Erfindung Insektenschutzmittel, die mit einer einen Wirkstoff enthaltenden Druckfarbe bedruckt sind.

Aus der Druckschrift CH 302450 sind Schutzmittel gegen Motten und andere Textilschädlinge bekannt, die aus einem blattförmigen Trägermaterial bestehen, und die mit einer ein Insektizid enthaltenden Druckfarbe bedruckt sind.

Die bisland bekannten Mottenschutzpapiere liegen üblicherweise in Streifenform vor. Bei der Herstellung wird der Wirkstoff über die gesamte Fläche des Papierstreifens aufgebracht. Der Papierstreifen wird anschliessend beschnitten und gefaltet.

Bei dieser Form der Herstellung des Mottenschutzpapiers fällt mit Insektizid beschichteter Beschnitt an, der nicht im Rohstoffkreislauf weiterverwendet werden kann, sondern der aufwändig entsorgt werden muss. Wirkstoffbeschichteter Stanzabfall fällt vor allem dann an, wenn nicht in einfachen rechteckigen Bahnen geschnitten wird. Sind beispielsweise abgerundete Ecken gewünscht, so fällt bereits dieser wirkstoffbeschichtete Stanzabfall an.

Die als Insektizide verwendeten Wirkstoffe haben eine begrenzte Verwendungsdauer, was bedeutet, dass die Wirkstoffabgabe nach mehreren Wochen oder Monaten nicht mehr erfolgt. Allerdings hängt die tatsächliche Dauer der Wirkstoffabgabe von den zeitlich veränderlichen Umgebungsbedingungen, unter anderem insbesondere der Temperatur, ab, sodass der Benutzer im Unklaren über das Erreichen des Endes des Wirksamkeit bleibt.

Die vorliegende Erfindung schlägt vor, ein Insektenschutzmittel mit einer Vorrichtung zur Anzeige der vebliebenden Wirkungsdauer zu versehen. Bei Verwendung von insektiziden Wirkstoffen mit hohem Dampfdruck kann die verbleibende Wirkstoffreserve über das gleichzeitige Verdunsten eines entsprechenden Verdunstungsmittels ermittelt werden.

Gemäß der vorliegenden Erfindung können des weiteren herkömmliche Druckverfahren zum Aufbringen der den Wirkstoff enthaltenden Druckfarbe verwendet werden. Ein insektizider Wirkstoff mit relativ hohem Dampfdruck, wie z.B. Transfluthrin, Metofluthrin oder Empenthrin, kann in eine oder mehrere der beim Drucken verwendente Farben eingearbeitet werden. Insbesondere bietet sich die Verwendung des Offsetdruckverfahrens zum gezielten Aufbringen der den Wirkstoff enthaltenden Druckfarbe auf das Trägermaterial an.

Der vorliegenden Erfindung gemäß umfasst ein Insektenschutzmittel ein Trägermaterial, das mit einem Wirkstoff beaufschlagt ist, wobei mindestens ein wirkstofffreier Bereich auf dem Trägermaterial vorgesehen ist. Das Insektenschutzmittel weist ferner eine Vorrichtung zur Anzeige der verbleibenden Wirkungsdauer des Wirkstoffs auf.

In einer ersten Ausführung kann die Vorrichtung zur Anzeige der verbleibenden Wirkungsdauer des Wirkstoffs in dem mindestens einen wirkstofffreien Bereich angeordnet sein.

In einer weiteren Ausführung können das wirkstofffreie Trägermaterial und das wirkstoffbeaufschlagte Trägermaterial einstückig ausgeführt sein.

In einer anderen Ausführung kann mindestens eine einen Wirkstoff enthaltende Druckfarbe mindestens einseitig auf das Trägermaterial aufgebracht sein. Dabei bedeckt die mindestens eine wirkstoffhaltige Druckfarbe das Trägermaterial nicht vollständig.

In einer weiteren Ausführung kann die Vorrichtung zur Anzeige der verbleibenden Wirkungsdauer des Wirkstoffs eine Verdunstervorrichtung sein.

In einer anderen Ausführung kann die Verdunstervorrichtung ein Behältnis umfassen, das mindestens einen transparenten Bereich zum Ablesen des Füllstands aufweist.

In einer weiteren Ausführung kann das Behältnis einen zu einer Seite hin offenen Hohlraum definieren.

In einer anderen Ausführung kann die offene Seite des Hohlraums mit einer halbdurchlässigen Membran verschlossen sein.

In einer anderweitigen Ausführung kann die halbdurchlässige Membran vor Verwendung des Insektenschutzmittels mit einer abnehmbaren Dampfsperre belegt sein.

In einer weiteren Ausführung kann die abnehmbare Dampfsperre eine Folie sein.

In einer anderweitigen Ausführung kann das Trägermaterial eine Lasche aufweisen, die mit der abnehmbaren dampfsperrende Folie verbunden ist, sodass eine Zugbewegung an der Lasche die dampfsperrende Folie von der halbdurchlässigen Membran abzieht.

In einer anderen Ausführung kann die Dampfsperre mit dem wirkstoffhaltigen Bereich des Trägermaterials so verbunden sein, dass bei Inverwendungnahme des Insektenschutzmittels die Folie von der halbdurchlässigen Membran entfernt wird.

In einer weiteren Ausführung kann der mindestens eine der Wirkstoff aus der Gruppe umfassend Transfluthrin, Metofluthrin und/oder Empenthrin gewählt sein.

In einer anderweitigen Ausführung kann mindestens eine Druckfarbe, die einen Wirkstoff mit hohem Dampfdruck enthält, mindestens einseitig auf das Trägermaterial aufgebracht sein.

In einer anderen Ausführung kann die mindestens eine wirkstoffhaltige Druckfarbe das Trägermaterial nicht vollständig bedecken.

In einer weiteren Ausführung kann die mindestens eine wirkstoffhaltige Druckfarbe im Offsetverfahren, Siebdruckverfahren oder Tintenstrahldruckverfahren aufgebracht sein.

In einer anderen Ausführung kann mindestens ein Randstreifen des Trägermaterials nicht mit wirkstoffhaltiger Druckfarbe bedeckt sein.

In einer anderweitigen Ausführung kann das Trägermaterial so beschnitten sein, dass die mit wirkstoffhaltiger Druckfarbe bedeckten Bereiche auf dem Trägermaterial verbleiben.

In einer anderen Ausführung kann die mindestens eine wirkstoffhaltige Druckfarbe auf eine Vielzahl von untereinander getrennten Bereichen des Trägermaterials aufgebracht sein.

In einer weiteren Ausführung kann die Vielzahl von untereinander getrennten Bereichen des Trägermaterials jeweils für sich durch Verschlussmittel verschlossen sein.

In einer anderen Ausführung können auf der Rückseite des Insektenschutzmittels Mittel zum Befestigen des Insektenschutzmittels vorgesehen sein.

In einer weiteren Ausführung kann das Trägermaterial bieg- und faltbar sein.

Die vorliegende Erfindung wird nun anhand der folgenden nichteinschränkenden Zeichnungen ausführlich beschrieben.

Fig.1 zeigt ein Insektenschutzmittel gemäß einem ersten Ausführungsbeispiel der vorliegenden Erfindung; und

Fig. 2 zeigt ein Insektenschutzmittel gemäß einem weiteren Ausführungsbeispiel der vorliegenden Erfindung.

Fig. 3 zeigt ein drittes Ausführungsbeispiel der vorliegenden Erfindung.

Fig. 4 zeigt ein viertes Ausführungsbeispiel des Insektenschutzmittels gemäß der vorliegenden Erfindung.

Fig. 5 zeigt ein fünftes Ausführungsbeispiel des Insektenschutzmittels gemäß der vorliegenden Erfindung.

Fig. 6 zeigt eine Ansicht des Insektenschutzmittels gemäß dem fünften Ausführungsbeispiels in Verwendung.

Fig. 7 zeigt eine Aufsicht des Insektenschutzmittels gemäß dem fünftes Ausführungsbeispiels vor Verwendung.

Gemäss einem ersten Ausführungsbeispiel umfasst ein vorzugsweise als Mottenschutzpapier ausgeführtes Insektenschutzmittel ein Trägermaterial, auf das mindestens eine Druckfarbe aufgebracht ist. Bei Verwendung von mehr als einer Druckfarbe kann in bekannter Weise Mehrfarbdruck erreicht werden.

Als Trägermaterial bieten sich alle Materialien an, die mittels herkömmlicher Druckverfahren bedruckbar sind. Bevorzugt werden hierzu blatt- oder bogenförmige Trägermaterialien, wie z.B. Papier oder Folien verwendet. Diese Materialien haben den Vorteil, dass sie geschnitten, gebogen bzw. gefalzt werden können.

Es ist jedoch auch möglich, druckfähiges, formbeständiges Trägermaterial zu verwenden, wenn dies für die spätere Verwendung des Insektenschutzmittels z.B. in Heizeinrichtungen oder Lüftern zweckmässig ist.

Weiterhin kann je nach späterer Verwendung auch ein wärmebeständiges Trägermaterial zum Einsatz kommen, falls das Insektenschutzmittel bei der Verwendung erwärmt wird, wie es z.B. in Heizeinrichtungen der Fall ist.

Wenigstens eine der verwendenten Druckfarben enthält mindestens einen Wirkstoff, der bevorzugterweise insektizid wirkt. Als Wirkstoff wird vorteilhafterweise Transfluthrin, Metofluthrin und / oder Empenthrin eingesetzt. Diese Wirkstoffe verfügen über einen relativ hohen Dampfdruck, sodass sie bei gleicher Wirksamkeit wie herkömmliche Wirkstoffe in geringerer Konzentration eingesetzt werden können. Darüber hinaus lassen sie sich leicht in herkömmliche Druckfarben einarbeiten.

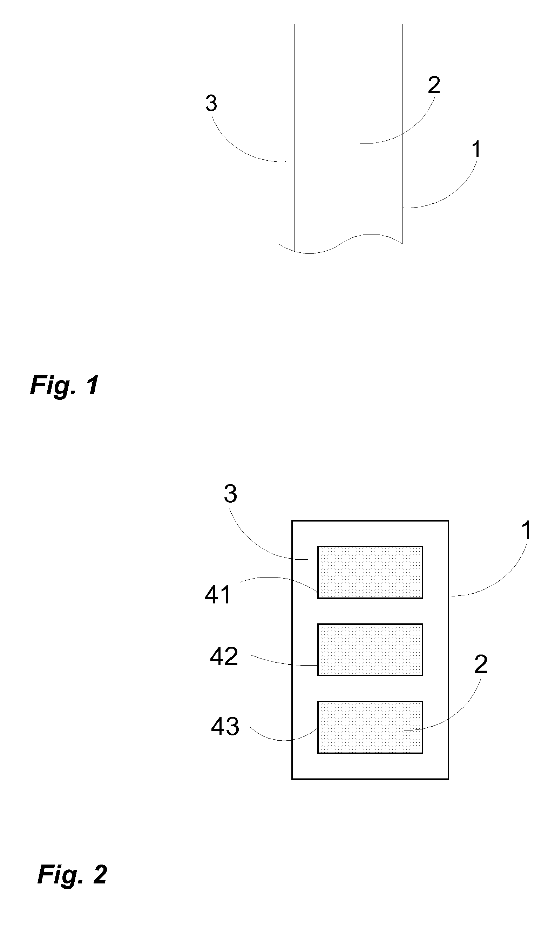

Wie in Fig. 1 gezeigt, ist die Druckfarbe einseitig auf das Trägermaterial aufgebracht, sie kann aber auch beidseitig aufgebracht sein. Dabei erfolgt der Auftrag der Druckfarbe so, dass die den Wirkstoff enthaltende Druckfarbe 2 das Trägermaterial 1 nicht vollständig bedeckt und mindestens eine Fläche 3 unbedeckt bleibt. Damit wird die Konzentration des Wirkstoffes auf dem Trägermaterial gegenüber der vollständigen Bedeckung verringert.

Zweckmässigerweise erfolgt der Auftrag der Druckfarbe im Offsetverfahren, insbesondere im Rollenoffset- bzw. Bogenoffsetverfahren. Alternativ ist auch ein anderes, geeignetes Druckverfahren, wie beispielsweise Siebdruck oder Tintenstrahldruck, einsetzbar.

Außerdem ist es möglich, mehr als eine Druckfarbe zu verwenden, um beispielsweise farbige Muster auf dem Trägermaterial zu erstellen. Je nach benötigter Wirkstoffkonzentration kann nur eine oder auch mehrere der Druckfarben den bzw. die Wirkstoffe enthalten. Bei Verwendung mehrerer Wirkstoffe kann beispielsweise jeweils eine Druckfarbe einen Wirkstoff enthalten, sodass sich mit gezieltem Farbauftrag die Wirkstoffverteilung auf dem Trägermaterial einstellen lässt.

Wahlweise können aber auch zwei in ihren sonstigen Eigenschaften, insbesondere ihrer Farbigkeit und Helligkeit, gleiche Druckfarben verwendet werden, wobei nur eine mit dem Wirkstoff versetzt ist. Durch gezieltes Bedrucken mit diesen vom Farbeindruck her gleichen Farben lässt sich bei Beibehaltung des optischen Eindrucks gegenüber herkömmlichen z.B. mit Flexodruck hergestellten Erzeugnissen die Gesamtkonzentration des aufgebrachten Wirkstoffs verringern. Vorzugsweise werden gleiche Farben mit der gleichen Intensität verwendet, wobei beispielsweise am Rande des Trägermaterials die Druckfarbe ohne Wirkstoff und weiter innen dann die Druckfarbe mit Wirkstoff aufgebracht ist.

Das Druckverfahren erfolgt dergestalt, dass vorzugsweise mindestens ein Randstreifen des Trägermaterial nicht mit wirkstoffhaltiger Druckfarbe bedeckt ist. Vorteilhafterweise sind bei einem streifenförmigen Trägermaterial beide Randstreifen frei von wirkstoffhaltiger Druckfarbe. Es kann auch der Anfangs- und/oder Endbereich des Streifens wirkstofffrei sein. Falls grafische Muster vorgesehen sind, können diese in Form von definierten, vorzugsweise mit wirkstoffhaltiger Druckfarbe bedruckten, Flächen ausgeführt werden.

Beim Beschnitt, der vorteilhafterweise dem Drucken folgt, und in dem das Trägermaterial auf die gewünschte Form und Grösse gebracht wird, fallen Stanzabfälle an. Daher ist es günstig, das Auftragen der wirkstoffenthaltenden Druckfarbe so zu gestalten, dass diejenigen Bereiche des Trägermaterials, die außerhalb des Bereichs der gewünschten Form und Grösse des Enderzeugnisses liegen, nicht mit wirkstoffhaltiger Druckfarbe bedeckt sind. Dadurch wird sichergestellt, dass der mittels Druckfarben aufgebrachte Wirkstoff im Wesentlichen vollständig in das endgültige Erzeugnis eingeht.

Gemäss einem weiteren Ausführungsbeispiel des Insektenschutzmittel ist, wie in Fig. 2 gezeigt, die mindestens eine wirkstoffhaltige Druckfarbe 2 auf eine Vielzahl von untereinander getrennten Bereichen 4 des Trägermaterials 3 aufgebracht. Bei einem streifenförmigen Trägermaterial können dies vorteilhafterweise verschiedene Felder 41, 42, 43 sein. Dabei können beliebige geometrische Formen, wie beispielsweise Streifen, Dreiecke, Quadrate, Rechtecke, Rauten, Kreise oder Ellipsen, zum Einsatz kommen.

Es wird bevorzugt, dass die Vielzahl von untereinander getrennten Bereichen 41, 42, 43 des Trägermaterials vor Verwendung des Insektenschutzmittels jeweils für sich durch Verschlussmittel verschlossen sind. Als Verschlussmittel wird bevorzugt eine gasdichte Abdeckung, wie beispielsweise eine Kunststofffolie, verwendet. Dieses Verschlussmittel kann darüberhinaus wiederverschließbar sein.

Auf der Rückseite des Insektenschutzmittels können Mittel zum Befestigen des Insektenschutzmittels vorgesehen sein. Dabei können die Befestigungsmittel als Klebemittel oder mechanische Aufhängemittel ausgeführt sein.

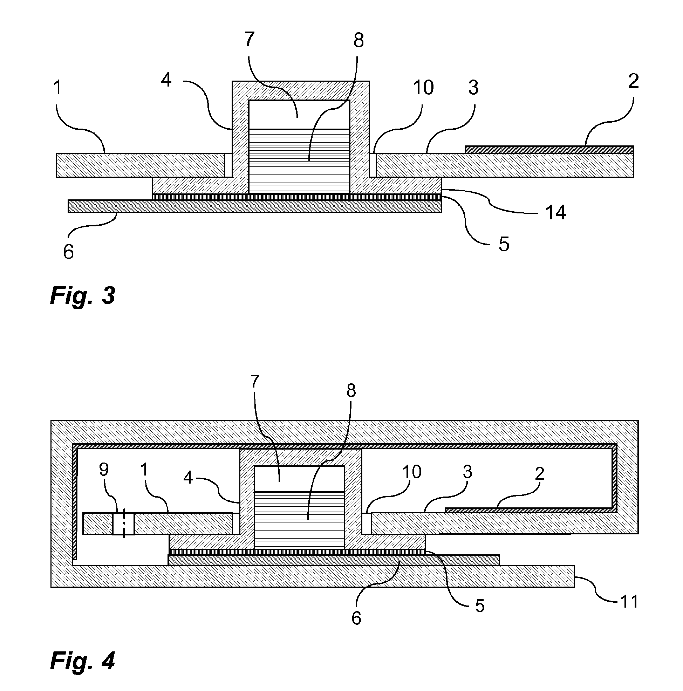

Ein weiteres Ausführungsbeispiel des erfindungsgemäßen Insektenschutzmittels ist in Fig. 3 dargestellt. In dieser nicht maßstäblichen Darstellung verweisen wiederum gleiche Bezugszeichen auf gleiche Elemente. Das Trägermaterial 1 ist beispielsweise wie in den vorhergehenden Ausführungsbeispielen mit einer wirkstoffhaltigen Druckfarbe 2 beschichtet und weist mindestens einen wirkstofffreien Abschnitt 3 auf. Es wird bevorzugt, dass das wirkstofffreie Trägermaterial und das wirkstoffbeaufschlagte Trägermaterial einstückig ausgeführt sind. Das Trägermaterial 1 weist vorzugsweise in einem wirkstoffreien Bereich einen ersten Ausschnitt 10 auf, in den ein Behältnis 4 eingesetzt ist. Behältnis 4 umfasst einen Hohlraum 7 und weist vorzugsweise außerdem einen flachen, flanschförmigen Bereich 14 zur Befestigung des Behältnisses 4 am Trägermaterial 1 auf. Diese Befestigung kann beispielsweise mittels eines Klebers erfolgen, oder auch sonst kraft- oder fomschlüssig sein. Das Behältnis 4 umschließt den Hohlraum 7 nicht vollständig, sodass an einer Seite, vorteilhaftweise an der in den Ausschnitt 10 eingesetzten und vom flachen Bereich 14 umgebenen Seite, eine Öffnung vorgesehen ist. Durch diese Öffnung kann der Hohlraum 7 mit einem Verdunstungsmittel 8 befüllt werden. Das Behältnis 4 besteht vorteilhafterweise vollständig aus transparentem Material oder aber es weist beispielsweise einen transparenten Bereich auf, durch den der Füllstand des Verdunstungsmittels 8 im Hohlraum 7 abgelesen werden kann. Nach Befüllung wird der Hohlraum 7 mit einer halbdurchlässigen Membran 5 verschlossen. Die halbdurchlässige Membran 5 sorgt dafür, das Verdunstungsmittel 8 in flüssigem Zustand im Hohlraum 7 zurückzuhalten, während die Dampfphase des Verdunstungsmittels 8 die Membran 5 passieren kann. Zum rückseitigen Ablesen des Füllstandes kann die halbdurchlässige Membran 5 in transparenter Ausführung vorgesehen werden. Dies kann sowohl zusätzlich als auch alternativ zu einem transparenten Bereich in Behältnis 4 erfolgen.

Bei der Herstellung wird die halbdurchlässige Membran 5 mit einer dampfundurchlässigen Folie 6 abgedeckt und verschlossen. Sowohl halbdurchlässige Membran 5 wie auch dampfundurchlässige Folie 6 erstrecken sich vorteilhafterweise über die Öffnung in Behältnis 4 hinaus. Falls ein flacher Rand 14 vorgesehen ist, dient dieser vorzugsweise zur lösbaren Befestigung der dampfundurchlässigen Folie 6. Durch das Aufbringen der dampfundurchlässigen Folie 6 wird verhindert, dass schon vor Benutzung des Insektenschutzmittels Verdunstungsmittel 8 in der Dampfphase austreten kann. Das Verdunstungsmittel 8 wird vorteilhafterweise von Dampfdruck und Volumen her so gewählt, dass die Verdampfung des Verdunstungsmittels 8 durch die halbdurchlässige Membran 5 im Wesentlichen so lange dauert, wie die Abgabe des Wirkstoffs aus den mit Druckfarbe 2 beschichteten Bereichen des Trägermaterials 1 anhält. Somit steht ein effizientes und verlässliches Mittel zur Anzeige der Verwendungsdauer, bzw. des Ablaufs der Wirksamkeit des Insektenschutzmittels zur Verfügung. Es kann von Vorteil sein, ein gegebenfalls durchsichtiges Verdunstungsmittel 8 zum leichteren Ablesen des Füllstands geeignet einzufärben.

Unter Bezugnahme auf die oben angeführten Ausführungsbeispielen kann das Verdunstungsmittel 8 in einem bevorzugten Beispiel mit einem Geruchsstoff, wie z.B. einem Parfum, usw. versetzt sein. Dadurch wird alternativ oder zusätzlich zur optischen Kontrolle des Füllstands des Verdunstungmittels auch eine Überprüfung per Geruchssinn ermöglicht. Solange Verdunstungsmittel vorhanden ist und an die Umgebungsluft abgegeben wird, ist gleichzeitig ein Geruchsstoff wahrzunehmen, was dem Benutzer auch ohne Sichtkontrolle eine ausreichende Wirkstoffreserve signalisiert,

Zur Aufbewahrung und zum Transport des Insektenschutzmittels wird dieses beispielsweise in eine dampfundurchlässige Folie verpackt, sodass der Wirkstoff noch nicht abgegeben wird. Zur Benutzung des Insektenschutzmittels öffnet der Benutzer die dampfundurchlässige Verpackung und zieht die Folie 6 von der halbdurchlässigen Membran 5 ab. Damit beginnt die Wirkstoffabgabe und gleichzeitig kann verdampftes Verdunstungsmittel 8 die Membran 5 passieren.

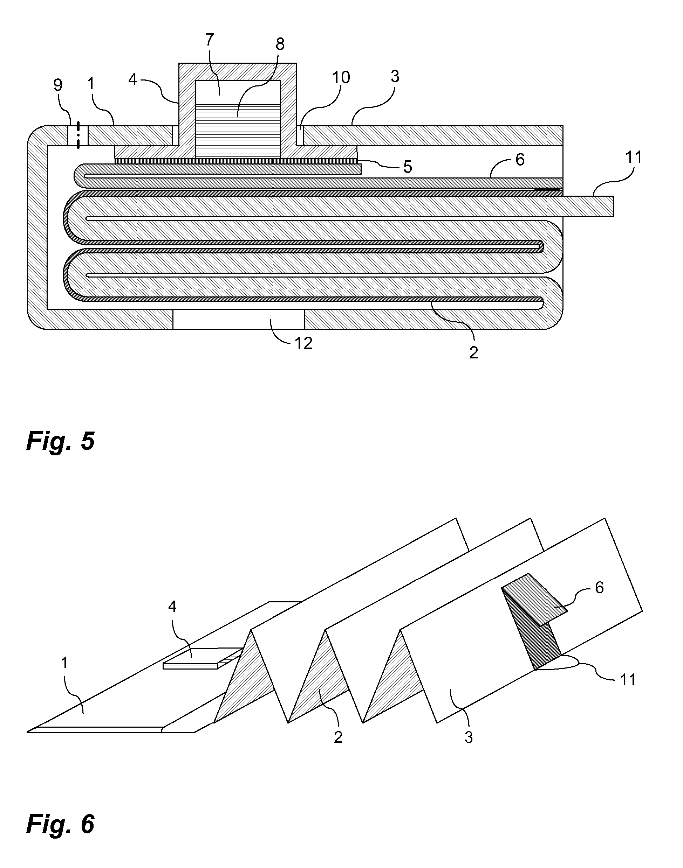

Es kann wünschenswert sein, sicherzustellen, dass bei Verwendung des Insektenschutzmittels die dampfundurchlässige Folie 6 abgezogen werden muss, um eine Fehlbedienung seitens des Benutzers auszuschließen. Entsprehende Ausführungsbeispiele sind in Fig. 4 und Fig. 5 gezeigt.

Fig. 4 zeigt ein weiteres Ausführungsbeispiel des erfindungsgemäßen Insektenschutzmittels. Gleiche Bezugszeichen in der Darstellung verweisen auf gleiche Elemente, so wie sie unter Bezug auf Fig. 3 schon beschrieben wurden. Abweichend von dem in Fig. 3 gezeigten Ausführungsbeispiel umschliesst das wirkstoffhaltige Trägermaterial 1 den vorteilhafterweise wirkstofffreien Bereich 3, in welchem sich das Behältnis 4 mit dem Verdunstungsmittel 8 befindet. Diese Umschliessung stellt eine größere wirkstoffbeschichtete Fläche bereit und verhindert des weiteren, dass die Folie 6 vor Benutzung des Insektenschutzmittels von der halbdurchlässigen Membran 5 entfernt werden kann. Eine Lasche 11 ist durch einen wirkstofffreien Bereich ausgebildet, um zu vermeiden, dass der Benutzer in direkten Kontakt mit dem Wirkstoff kommt. Desweiteren wird das Öffnen des Insektenschutzmittels durch Ziehen an der Lasche 11 mit dem Entfernen der Folie 6 von der Membran 5 verbunden, sodass zu Beginn der Verwendung des Insektenschutzmittels die Membran freigelegt wird und die Verdunstung des Verdunstungsmittels 8 beginnt. Die Umschließung kann vorteilhafterweise als gefalteter Umschlag ausgeführt werden.

Das in Fig. 5 dargestellte Ausführungsbeispiel umfasst einen vorzugsweise einstückig mit dem Trägermaterial 1 ausgeführten Umschlag aus wirkstofffreiem Trägermaterial. Gleiche Bezugszeichen in der Darstellung verweisen auf gleiche Elemente, so wie sie unter Bezug auf Fig. 3 und 4 schon beschrieben wurden. Abweichend von dem in Fig. 4 gezeigten Ausführungsbeispiel umschliesst der Umschlag einen Vorrat von Falten aus wirkstoffhaltigem Trägermaterial 1. Die Aufbringung des Wirkstoffs auf das Trägermaterial 1 geschieht vorteilhafterweise durch Bedrucken mit wirkstoffhaltiger Druckfarbe 2.

Auf der Rückseite des Umschlags ist gegenüber der Membran 5 ein Fenster in Form eines Auschnitts 12 angeordnet, sodass bei Verwendung des Insektenschutzmittels, wenn die Falten aus dem vom Trägermaterial 1 gebildeten Umschlag entnommen sind, die halbdurchlässige Membran 5 nicht von der Umschlagrückseite verdeckt ist. Damit kann das Verdunstungsmittel 8, nachdem es einmal die Membran 5 passiert hat, ungehindert an die Umgebungsluft austreten. Auch dieser Ausschnitt 12 ist vorteilhafterweise ein einem wirkstofffreien Bereich angeordnet.

Eine weitere Ansicht des in Fig. 5 dargestellten Ausführungsbeispiels ist in Fig. 6 gezeigt. Die Zeichnung zeigt das erfindungsgemäße Insektenschuzmittel bei Verwendung. Durch Ziehen an der Lasche 11 ist die Folie 6 von der halbdurchlässigen Membran 5 abgezogen worden und gleichzeitig sind die mit der wirkstoffhaltigen Druckfarbe 2 beschichteten Falten aus dem durch das Trägermaterial 1 gebildeten Umschlag berausgezogen worden. Der Wirkstoff wird aus den mit Druckfarbe beaufschlagten Bereichen abgegeben und die Verdunstung des Verdunstungmittels 8 beginnt.

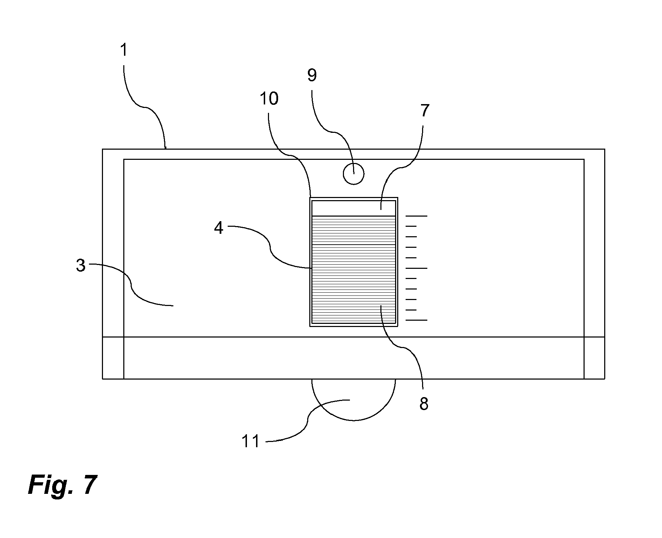

Schließlich ist in Fig. 7 eine Aufsicht auf das in Fig. 5 gezeigte Ausführungsbeispiel dargestellt. In dieser Zeichnung ist das erfindungsgemäße Insektenschutzmittel als verpacktes Produkt zu sehen. Die mit wirkstoffhaltiger Druckfarbe 2 beaufschlagten Falten befinden sich zusammengelegt im durch das unbeschichtete Trägermaterial 1 gebildeten Umschlag. Auf der Umschlagvorderseite sind vorzugsweise neben dem vorteilhafterweise transparenten Behältnis 4 zur Aufnahme des Verdunstungsmittels 8 Ablesehilfsmittel vorgesehen. Diese Ablesehilfsmittel können beispielsweise durch Druckmarkierungen gebildet werden, welche das Ablesen des Verdunstungsmittelfüllstands erleichtern.

Weiterhin ist in Fig. 7 eine beispielhafte Positionierung der Aufhängung 9 in Form einer lochförmigen Aussparung zu sehen. Alternativ können auch zwei, vorteilhafterweise zum Schwerpunkt symmetrisch angeordnete Aufhängungen vorgesehen werden.

Die vorzugsweise im wirkstofffreien Bereich ausgeführte Lasche 11 ermöglicht das leichte Greifen der Falten sowie der Folie 6, ohne dass der Benutzer mit dem Wirkstoff in direkte Berührung kommt.

Die vorliegende Erfindung zeichnet sich unter anderem durch die folgenden Eigenschaften aus:

Der Benutzer kann in einfacher Weise das Ende der Wirkstoffabgabe erkennen und das Insektenschutzmittel austauschen.

Die Inverwendungnahme des Insektenschutzmittels löst die Überwachung des Endes der Wirksamkeit aus. Durch Anordnen einer Vorrichtung zur Anzeige der verbleibenden Wirkungsdauer des Wirkstoffs in einem wirkstofffreien Bereich kann wirkstoffbelasteter Stanz- bzw. Schnittabfall reduziert oder vermieden werden.

Der Verbrauch an Lösungsmitteln wird reduziert. Durch Einarbeiten eines geeigneten Wirkstoffs in die mindestens eine Druckfarbe kann die Menge an Lösungsmittel, die während des Produktionsprozesses frei wird, deutlich verringert werden.

Es fällt kein wirkstoffbeaufschlagter Beschnitt / Stanzabfall mehr an, sodass weniger Sondermüll anfällt. Durch die Verwendung des Offsetdruckverfahrens können verschiedenste Formen und Motive sehr präzise auf das Trägermaterial gedruckt werden. Dies bedeutet, dass auch der Wirkstoffauftrag sehr genau erfolgt, wodurch bei geeigneter Wahl der Motive kein wirkstoffbeaufschlagter Stanzabfall anfällt. Auf diese Weise wird die Umweltbelastung verringert und gleichzeitig ein Kostenvorteil in der Produktion erzielt.

Mit Hilfe des Offsetdruckverfahrens können verschiedene Trägermaterialien für die Wirkstoffe bedruckt werden. Bei der Berechnung der Kennzeichnungspflicht des fertiggestellten Produktes wird der Anteil des Trägermaterials ebenfalls berücksichtigt. Dies bedeutet, dass je grösser der Anteil des Trägermaterials am Erzeugnis ist, und je geringer der Anteil des Wirkstoffes ist, desto geringer fällt die Kennzeichnungsklasse aus.

Andere Druckverfahren, die ein gezieltes Aufbringen von Druckfarben auf ein Trägermaterial ermöglichen, wie z.B. Siebdruck oder auch Tintenstrahldruck, können ebenfalls für das Aufbringen der mindestens einen wirkstoffhaltigen Druckfarbe verwendet werden.

Viele Erzeugnisse, die vor allem für die Verwendung in kleineren Räumen, wie z.B. Kleiderschränke usw., sind zur Anwendung ohne Hilfsmittel bestimmt. Durch Aufkleben von wirkstoffbeschichtetem Trägermaterial auf warme oder heiße Flächen kann die Wirkstoffabgabe beschleunigt werden, wie z.B. bei der Anwendung eines wirkstoffbeschichteten Etiketts im Innenraum auf der Autoscheibe oder auf einer sonnengewärmten Fensterscheibe.

Darüberhinaus lässt sich beispielsweise ein wirkstoffbeschichtetes Etikett an Fensterrahmen, die häufig in Kippstellung sind, anbringen. Durch den Luftzug wird der Wirkstoff schneller verdunstet. Selbstverständlich könnten derartig beschichtete Trägermaterialien auch in beheitzen Geräten oder in Ventilatorgeräten eingesetzt werden.

Das erfindungsgemäße Insektenschutzmittel bietet Flexibilität in seiner Herstellung, denn bereits kleinere Mengen können problemlos produziert werden. Dies bedeutet größere Flexibilität für Hersteller und Kunden im Vergleich zu Flexodruck, weil z.B. zeitaufwendige Bestell- und Produktionsvorläufe entfallen, da Standardmaterialien eingesetzt werden können.

Das erfindungsgemäße Insektenschutzmittel ermöglicht eine vereinfachte Qualitätskontrolle. Durch gängige Verfahren zur Kontrolle des Farbauftrages erfolgt bei konstanter Wirkstoffbeimischung direkt auch die Kontrolle des Wirkstoffauftrags. Ferner erfolgt der Wirkstoffauftrag mittels Offsetdruck, Siebdruck oder Tintenstrahldruck präziser als mit anderen bekannten Auftragsverfahren wie z.B. Flexodruck.

## Patentansprüche

1. Insektenschutzmittel, umfassend ein Trägermaterial (1), das mit einem Wirkstoff beaufschlagt ist, wobei mindestens ein wirkstofffreier Bereich auf dem Trägermaterial vorgesehen ist, und das Insektenschutzmittel eine Vorrichtung (4) zur Anzeige der verbleibenden Wirkungsdauer des Wirkstoffs aufweist.

2. Insektenschutzmittel gemäß Anspruch 1, wobei die Vorrichtung (4) zur Anzeige der verbleibenden Wirkungsdauer des Wirkstoffs in dem mindestens einen wirkstofffreien Bereich angeordnet ist.

3. Insektenschutzmittel gemäß Anspruch 1 oder 2, wobei das wirkstofffreie Trägermaterial und das wirkstoffbeaufschlagte Trägermaterial einstückig sind.

4. Insektenschutzmittel gemäß einem der vorangehenden Ansprüche, wobei mindestens eine einen Wirkstoff enthaltende Druckfarbe (2) mindestens einseitig auf das Trägermaterial aufgebracht ist, und wobei die mindestens eine wirkstoffhaltige Druckfarbe (2) das Trägermaterial nicht vollständig bedeckt.

5. Insektenschutzmittel gemäß Anspruch 1, wobei die Vorrichtung (4) zur Anzeige der verbleibenden Wirkungsdauer des Wirkstoffs eine Verdunstervorrichtung ist.

6. Insektenschutzmittel gemäß Anspruch 5, wobei die Verdunstervorrichtung ein Behältnis (4) umfasst, das mindestens einen transparenten Bereich zum Ablesen des Füllstands aufweist.

7. Insektenschutzmittel gemäß Anspruch 6, wobei das Behältnis (4) einen zu einer Seite offenen Hohlraum (7) definiert.

8. Insektenschutzmittel gemäß Anspruch 7, wobei die offene Seite des Hohlraums (7) mit einer halbdurchlässigen Membran (5) verschlossen ist.

9. Insektenschutzmittel gemäß Anspruch 8, wobei die halbdurchlässige Membran (5) vor Verwendung des Insektenschutzmittels mit einer abnehmbaren Dampfsperre (6) belegt ist.

10. Insektenschutzmittel gemäß Anspruch 9, wobei die abnehmbare Dampfsperre eine Folie (6) ist.

11. Insektenschutzmittel gemäß Anspruch 10, wobei das Trägermaterial (1) eine Lasche (11) aufweist, die mit der abnehmbaren dampfsperrende Folie verbunden ist, sodass eine Zugbewegung an der Lasche (11) die dampfsperrende Folie (6) von der halbdurchlässigen Membran (5) abzieht.

12. Insektenschutzmittel gemäss einem der Ansprüche 9 bis 11, wobei die Dampfsperre (6) mit dem wirkstoffhaltigen Bereich des Trägermaterials so verbunden ist, dass bei Inverwendungnahme des Insektenschutzmittels die Folie (6) von der halbdurchlässigen Membran (5) entfernt wird.

13. Insektenschutzmittel gemäss einem der vorangehenden Ansprüche, wobei der mindestens eine Wirkstoff aus der Gruppe umfassend Transfluthrin, Metofluthrin und/oder Empenthrin gewählt ist.

14. Insektenschutzmittel, gemäss einem der vorangehenden Ansprüche, wobei mindestens eine Druckfarbe (2) die einen Wirkstoff mit hohem Dampfdruck enthält, mindestens einseitig auf das Trägermaterial aufgebracht ist.

15. Insektenschutzmittel gemäss einem der vorangehenden Ansprüche, wobei die mindestens eine wirkstoffhaltige Druckfarbe (2) im Offsetverfahren, Siebdruckverfahren oder Tintenstrahldruckverfahren aufgebracht ist.

16. Insektenschutzmittel gemäss einem der vorangehenden Ansprüche, wobei mindestens ein Randstreifen (3) des Trägermaterials nicht mit wirkstoffhaltiger Druckfarbe (2) bedeckt ist.

17. Insektenschutzmittel gemäss einem der voranstehenden Ansprüche, wobei das Trägermaterial so beschnitten ist, dass die mit wirkstoffhaltiger Druckfarbe (2) bedeckten Bereiche auf dem Trägermaterial verbleiben.

18. Insektenschutzmittel gemäss einem der vorangehenden Ansprüche, wobei die minestens eine wirkstoffhaltige Druckfarbe (2) auf eine Vielzahl von untereinander getrennten Bereichen (4) des Trägermaterials (1) aufgebracht ist.

19. Insektenschutzmittel gemäss einem der vorangehenden Ansprüche, wobei die Vielzahl von untereinander getrennten Bereichen (4) des Trägermaterials jeweils für sich durch Verschlussmittel verschlossen sind.
